# EUROPÄISCHE PATENTSCHRIFT

(11) **EP 2 366 315 B1**
(45) Veröffentlichungstag und Bekanntmachung des Hinweises auf die Patenterteilung: **16.03.2016**
(21) Anmeldenummer: 10194346.2
(22) Anmeldetag: 09.12.2010
(51) Int. Cl.: A47J 27/04, F22B 1/28, F22B 37/56

(54) **Dampferzeugungssystem für ein Haushaltsgerät und Verfahren zum Betreiben eines Dampferzeugungssystems**
System for generating steam for a domestic appliance and method for operating such a steam generation system
Système de production de vapeur pour un appareil ménager et procédé de fonctionnement d'un système de production de vapeur

(30) Priorität: 22.12.2009 DE 102009055146
(43) Veröffentlichungstag der Anmeldung: 21.09.2011
(73) Patentinhaber: BSH Hausgeräte GmbH, 81739 München (DE)
(72) Erfinder: Grosch, Sebastian, 88400 Biberach (DE); Lorenz, Tilmann, 93049 Regensburg (DE); Wiedenmann, Reinhard, 76356 Weingarten (DE)

(56) Entgegenhaltungen:
- EP-A1- 1 702 542
- EP-A1- 2 037 183
- DE-A1- 19 912 444

## Beschreibung

Die Erfindung betrifft ein Dampferzeugungssystem für ein Haushaltsgerät, insbesondere Dampfgargerät, welches ein entleerbares Flüssigkeitsreservoir, einen aus dem Flüssigkeitsreservoir mit Flüssigkeit versorgbaren Verdampfer und mindestens eine Pumpe zum Pumpen der Flüssigkeit aufweist. Die Erfindung betrifft ferner ein Verfahren zum Betreiben eines Dampferzeugungssystems mit einem Flüssigkeitsreservoir, einem aus dem Flüssigkeitsreservoir versorgbaren Verdampfer und mindestens einer Pumpe zum Pumpen der Flüssigkeit.

Beispielsweise aus US 6,833,032 B1 oder aus US 5,279,676 sind Dampferzeugungssysteme bekannt, deren Verdampfer mittels einer in einer Richtung durchströmenden Entkalkungsflüssigkeit entkalkt werden. Die verbrauchte Entkalkungsflüssigkeit wird über einen Ablauf aus dem Gerät entfernt.

DE 10 2006 062 069 A1 geht aus von einer Gargeräte-Dampferzeugungsvorrichtung mit wenigstens einem Durchlauferhitzer zum Erzeugen von Dampf zum Einspeisen in einen Garraum und einer Förderpumpe zum Einspeisen von Wasser in den Durchlauferhitzer. Um eine solche Gargeräte-Dampferzeugungsvorrichtung und ein Verfahren zum Betreiben einer solchen Gargeräte-Dampferzeugungsvorrichtung bereitzustellen, die bei feiner Dosierbarkeit des Dampfs mit einem offenen Tanksystem betrieben werden kann und die weitgehend unabhängig vom Druck im Garraum arbeitet, wird vorgeschlagen, dass die Gargeräte-Dampferzeugungsvorrichtung wenigstens ein zwischen der Förderpumpe und dem Durchlauferhitzer angeordnetes Druckausdehnungselement umfasst. Eine Steuereinheit steuert zudem ein Display eines die Gargeräte-Dampferzeugungsvorrichtung umfassenden Gargeräts. Falls eine Kenngröße für einen Verkalkungsgrad des Durchlauferhitzers einen vorgegebenen Schwellenwert übertrifft, erzeugt die Steuereinheit ein Warn- oder Hinweissignal auf dem Display, welches einen Benutzer auffordert, einen Entkalkungsvorgang zu starten. Dazu wird das System mit einer Entkalkungsflüssigkeit gespült, die vom Benutzer in einen Tank eingefüllt werden muss. Prinzipiell wären auch Ausgestaltungen denkbar, in welchen der Entkalkungsvorgang automatisch gestartet wird, was einen separaten Tank für die Entkalkungsflüssigkeit voraussetzt. Die Entkalkungsflüssigkeit, die den Durchlauferhitzer durchlaufen hat, wird über das Einspeisungselement abgeführt. Das Einspeisungselement hat eine Düse und einen Tropfenabscheider, sowie eine schneckenförmige Prallwand. Größere Wassertröpfchen aus dem aus der Düse austretenden Dampfstrahl können aufgrund ihrer Trägheit der gekrümmten Bahn des Luftstroms nicht folgen und schlagen an der Prallwand nieder. Das abgeschiedene Wasser wird über eine Rücklaufleitung zwischen dem Tank und der Förderpumpe zurückgeführt.

EP 1 702 542 A1 offenbart ein Haushaltgerät mit einer Pumpe zum Fördern von Wasser zwischen einem Reservoir und einem Verdampfer. Das Gerät verfügt über eine Förderpumpe, um Wasser zwischen einem Wasserreservoir und einem als Boiler ausgebildeten Verdampfer und einem Ventil zwischen der Pumpe und dem Reservoir angeordnet zuzuführen. Das Dampfgargerät weist eine Pumpe für eine Förderrichtung auf, nämlich von dem Verdampfer zu dem Wasserreservoir. Die umgekehrte Richtung des Wasserlaufs von dem Wasserreservoir zu dem Verdampfer ist gravitationsgetrieben.

EP 2 037 183 A1 betrifft einen Dampfgarofen und einen Wassertank zur Verwendung darin, bei dem zwei unterschiedliche Pumpen für jeweils eine Förderrichtung vorgesehen sind.

Es ist die **Aufgabe** der vorliegenden Erfindung, die Nachteile des Standes der Technik zumindest teilweise zu beseitigen und insbesondere eine Möglichkeit zur einfachen Entleerung eines Dampferzeugungssystems bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Dampferzeugungssystem für ein Haushaltsgerät, mindestens aufweisend ein entleerbares Flüssigkeitsreservoir, einen aus dem Flüssigkeitsreservoir mit Flüssigkeit versorgbaren Verdampfer, mindestens eine Pumpe zum Pumpen oder Fördern der Flüssigkeit sowie allen weiteren Merkmalen des unabhängigen Anspruchs 1.

Mittels des Verdampfers wird typischerweise ihm zugeführtes Wasser in Wasserdampf umgewandelt. Der Wasserdampf kann dann in einen Behandlungsraum des Haushaltsgeräts, z.B. in einen Garraum eines Gargeräts, eingebracht werden.

Das Dampferzeugungssystem weist ferner die Eigenschaft auf, dass die Flüssigkeit mittels der mindestens einen Pumpe in Richtung des Flüssigkeitsreservoirs rückförderbar oder rückpumpbar ist. Während bisher die Flüssigkeit nur aus dem Flüssigkeitsreservoir in den Verdampfer gepumpt werden kann und Flüssigkeit aus dem Verdampfer zu seiner Entleerung über einen eigenen Ablauf aus dem Haushaltsgerät abgeleitet wird, kann die Flüssigkeit in dem vorliegenden Verdampfer nun zurück in das Flüssigkeitsreservoir gepumpt werden. Dadurch kann auf einen separaten Ablauf verzichtet werden. Zudem kann für den Fall, dass der Verdampfer mit einer Reinigungsflüssigkeit, insbesondere Entkalkungsmittel, oder einer Spülflüssigkeit befüllt werden soll, diese Flüssigkeit in das Flüssigkeitsreservoir eingefüllt und nach Beendigung des Reinigungs- oder Spülablaufs wieder in das Flüssigkeitsreservoir zurückgepumpt und folgend einfach daraus entleert werden. Ein separates Reservoir für die Reinigungsflüssigkeit und/oder Spülflüssigkeit kann entfallen, was Kosten und Bauraum einspart. Allgemein kann die in dem Flüssigkeitsreservoir befindliche Flüssigkeit mehrfach zum Reinigen oder Spülen verwendet werden, was einen besonders umweltfreundlichen Betrieb zulässt.

Der Verdampfer kann ein Durchlauferhitzer oder ein Boiler sein. Bei einem Durchlauferhitzer wird typischerweise ein in einem Heizrohr stehendes Wasser durch eine das Heizrohr umgebende Heizung erhitzt, während in einem Boiler ein mit Wasser gefüllter Behälter durch eine meist in einem Boden des Behälters eingebrachte Heizplatte aufgeheizt wird. Ein Durchlauferhitzer weist den Vorteil auf, dass die Erwärmung des Wassers besonders schnell geschieht und eine Dampfregelung vergleichsweise schnell anspricht.

Die Flüssigkeit kann insbesondere Wasser sein, insbesondere mit oder ohne Zusätze (Aromen, Reinigungskonzentrat usw.).

Es ist Teil der Erfindung, dass das Dampferzeugungssystem eine einzige Pumpe für beide Förderrichtungen aufweist, wobei die Pumpe wahlweise mit ihrer Druckseite oder ihrer Saugseite mit dem Verdampfer fluidisch verbindbar ist und mit ihrer jeweils anderen Seite mit dem Flüssigkeitsreservoir verbindbar ist. So kann ein besonders kompaktes und kostengünstiges Dampferzeugungssystem bereitgestellt werden.

Es ist eine weitere Ausgestaltung, dass das Dampferzeugungssystem mindestens zwischen einem ersten Schaltzustand und einem zweiten Schaltzustand umschaltbar ist, z.B. mittels eines oder mehrerer Ventile, wobei in dem ersten Schaltzustand die Pumpe mit ihrer Druckseite mit dem Verdampfer fluidisch verbunden ist und mit ihrer Saugseite mit dem Flüssigkeitsreservoir verbunden ist und in dem zweiten Schaltzustand die Pumpe mit ihrer Saugseite mit dem Verdampfer fluidisch verbunden ist und mit ihrer Druckseite mit dem Flüssigkeitsreservoir verbunden ist. So kann auch mit nur einer Pumpe ein Wechsel zwischen einem Befüllen des Verdampfers (entsprechend dem ersten Schaltzustand) und Entleeren des Verdampfers (entsprechend dem zweiten Schaltzustand) durch ein einfaches Umkonfigurieren der Flüssigkeitsleitung(en) bewirkt werden.

Alternativ zu der erfindungsgemäßen Verwendung der nur einen Pumpe kann das Dampferzeugungssystem je eine Pumpe für eine der beiden Förderrichtungen aufweisen, was jedoch nicht Teil der vorliegenden Erfindung ist. Dabei wird eine der beiden Pumpen (erste Pumpe) zum Befüllen des Verdampfers verwendet und die andere der beiden Pumpen (zweite Pumpe) zum Entleeren des Verdampfers. Es kann insbesondere in einem "Schaltzustand" a (entsprechend einem Betrieb in einer ersten Förderrichtung) zum Befüllen des Verdampfers die erste Pumpe betrieben werden und die zweite Pumpe angehalten sein, wobei die angehaltene zweite Pumpe als ein Absperrventil dienen kann. In einem "Schaltzustand" b (entsprechend einem Betrieb in einer umgekehrten, zweiten Förderrichtung) zum Entleeren des Verdampfers kann wiederum die zweite Pumpe betrieben werden und die erste Pumpe angehalten sein, wobei die angehaltene erste Pumpe auch hier als ein Absperrventil dienen kann. Diese Ausgestaltung weist den Vorteil auf, dass sie nur wenige hydraulisch anzuschließende Teile und somit eine erhöhte Lecksicherheit aufweist. Auch ist eine Schaltung zwischen den Schaltzuständen besonders einfach.

Es ist ferner eine Ausgestaltung, dass die (z.B. einzige im Fall einer Pumpe im Rahmen der vorliegenden Erfindung oder erste im Fall zweier Pumpen außerhalb des Rahmens der vorliegenden Erfindung) Pumpe an ihrer Saugseite wahlweise mit dem Flüssigkeitsreservoir oder mit einem Lufteinlass fluidisch verbindbar ist. So kann die Pumpe beispielsweise in ihrem zweiten Schaltzustand mit ihrer Saugseite sowohl mit dem Verdampfer als auch mit dem Flüssigkeitsreservoir fluidisch verbunden sein, wodurch sich eine besonders gute Zirkulation der Flüssigkeit aus dem Flüssigkeitsreservoir und Vermischung mit der aus dem Verdampfer abgesaugten Flüssigkeit ergibt. Alternativ kann die (insbesondere einzige oder erste) Pumpe in dem zweiten Schaltzustand mit dem Lufteinlass fluidisch verbunden sein. Gleichzeitig kann ein Abfluss von Flüssigkeit aus dem Flüssigkeitsreservoir blockiert sein. Dadurch wird eine Entleerung bzw. Belüftung auch zumindest eines Teils der Versorgungsleitung(en) ermöglicht und ferner eine Förderleistung von Flüssigkeit aus dem Verdampfer erhöht.

Es ist eine weitere Ausgestaltung, dass das Dampferzeugungssystem dazu eingerichtet ist, die (insbesondere einzige oder zweite) Pumpe zu betreiben, wenn sich das Dampferzeugungssystem in dem zweiten Schaltzustand befindet, z.B. während eines Entleerungsablaufs. Dieser Entleerungsablauf kann, insbesondere als eine separate Gerätefunktion, z.B. dazu dienen, die Verdampfungseinheit auf eine längere Phase einer Nichtbetätigung vorzubereiten und ein Biofouling der Flüssigkeit (durch Bildung von Bakterien, Viren und/oder Algen usw.) zu vermeiden.

Es ist ferner eine Ausgestaltung, dass das Dampferzeugungssystem dazu eingerichtet ist, zwischen dem ersten Schaltzustand und dem zweiten Schaltzustand umzuschalten (zyklischer Betrieb) und in jedem der beiden Schaltzustände die jeweilige (einzige oder eine von mehreren) Pumpe zumindest zeitweilig zu betreiben. Dadurch kann die Verdampfungseinheit zyklisch bzw. mehrfach befüllt und wieder entleert werden. Es wird für eine effektive Reinigung und/oder Spülung bevorzugt, wenn dafür der Verdampfer zuerst entleert bzw. leergepumpt wird.

Es ist eine für eine effektive Reinigung besonders bevorzugte Ausgestaltung, dass das Flüssigkeitsreservoir mit Reinigungsflüssigkeit gefüllt ist und das Dampferzeugungssystem dazu eingerichtet ist, in dem ersten Schaltzustand die (einzige oder eine von mehreren) Pumpe zunächst zeitweilig zu betreiben und folgend nicht zu betreiben. Dadurch wird während eines Reinigungsprozesses oder -abschnitts zunächst Reinigungsflüssigkeit in den Verdampfer gepumpt und folgend dort belassen (gehalten), um der Reinigungsflüssigkeit ausreichend Zeit zu geben, auf den Verdampfer einzuwirken. Die Reinigungsflüssigkeit wird danach insbesondere wieder abgepumpt. Bei je einer Pumpe für eine Förderrichtung, was nicht Teil der Erfindung ist, können zum Halten der Reinigungsflüssigkeit beide Pumpen angehalten werden, welche dann jeweils als ein Absperrventil dienen können.

Für eine weitere Erhöhung der Reinigungswirkung ist es eine Ausgestaltung, dass das Dampferzeugungssystem dazu eingerichtet ist, den Verdampfer zumindest in dem ersten Schaltzustand zu betreiben, also die in ihm befindliche Flüssigkeit, insbesondere Reinigungsflüssigkeit, zu erwärmen. Beispielsweise kann typischerweise so eine Entkalkungsreaktion beschleunigt werden. Der Verdampfer kann insbesondere aktivierbar sein, wenn die Flüssigkeit in dem Verdampfer gehalten wird.

Alternativ kann das Flüssigkeitsreservoir mit Wasser gefüllt sein, um den Verdampfer zu spülen, z.B. um Reste von Reinigungsflüssigkeit nach einem Reinigungsabschnitt zu entfernen. Das Spülen kann jedoch auch unabhängig von einem Reinigungsprozess, insbesondere Entkalkungsprozess, durchgeführt werden. So kann mittels des Spülens, insbesondere zyklischen Spülens, auch sich an einem geodätisch tiefsten Bereich zwischen der Pumpe und dem Verdampfer befindliches besonders kalkhaltiges Wasser, das z.B. auch Kalkteilchen aufweisen kann, entfernt bzw. ausgespült werden. So kann eine Kalkbelastung des Dampferzeugungssystems auch ohne eine Verwendung einer Reinigungsflüssigkeit verringert werden.

Es wird für eine gründliche Reinigung und/oder Spülung bevorzugt, dass für ein Reinigen bzw. ein Spülen des Verdampfers dieser mindestens bis über sein höchstes Füllstandsniveau im normalen Betrieb hinaus befüllt wird, insbesondere vollständig befüllt wird.

Es ist noch eine weitere Ausgestaltung, dass dem Verdampfer eine Füllstandsdetektionseinrichtung fluidisch parallel geschaltet ist. Dann kann die Füllstandsdetektionseinrichtung insbesondere gleichzeitig und analog zu dem Verdampfer mit Flüssigkeit befüllt und davon entleert werden. Die für den Verdampfer getätigten Ausführungen können somit insbesondere auch in Kombination mit der und für die Füllstandsdetektionseinrichtung gelten.

Es ist noch eine Ausgestaltung, dass das Flüssigkeitsreservoir entnehmbar ist. Dadurch wird eine Entleerung gegenüber einer grundsätzlich auch möglichen Entleerung über einen Ablauf an dem Flüssigkeitsreservoir erheblich erleichtert. Zudem kann das Flüssigkeitsreservoir so selbst einfach gereinigt werden, z.B. manuell ausgespült werden. Das Flüssigkeitsreservoir kann innerhalb oder außerhalb des Haushaltsgeräts untergebracht sein. Das Haushaltsgerät kann insbesondere ein Gargerät mit einer Dampfgarfunktion sein, z.B. ein Backofen mit der Dampfgarfunktion oder ein dedizierter Dampfgarer, aber auch ein Wäschetrockner mit einer Dampfgarfunktion.

Die Aufgabe wird auch gelöst durch ein Verfahren zum Betreiben eines Dampferzeugungssystems mit allen Merkmalen des unabhängigen Anspruchs 12, das Dampferzeugungssystem insbesondere mit einem Flüssigkeitsreservoir, einem aus dem Flüssigkeitsreservoir mit Flüssigkeit versorgbaren Verdampfer und mindestens einer Pumpe zum Pumpen oder Fördern der Flüssigkeit, wobei unter Anderem zum Entleeren mindestens des Verdampfers Flüssigkeit mittels der mindestens einen Pumpe aus dem Verdampfer in das Flüssigkeitsreservoir zurückgefördert wird. Auch hierdurch kann auf einen separaten Ablauf verzichtet werden. Zudem kann für den Fall, dass der Verdampfer mittels einer Reinigungsflüssigkeit, insbesondere Entkalkungsmittel, oder einer Spülflüssigkeit befüllt wird, diese Flüssigkeit vorher in das Flüssigkeitsreservoir eingefüllt und nach Beendigung des Reinigungs- oder Spülablaufs wieder in das Flüssigkeitsreservoir zurückgepumpt und folgend einfach daraus entleert werden. Ein separates Reservoir für die Reinigungsflüssigkeit und/oder Spülflüssigkeit kann entfallen, was Kosten und Bauraum einspart. Allgemein kann die in dem Flüssigkeitsreservoir befindliche Flüssigkeit mehrfach zum Reinigen oder Spülen verwendet werden, was einen besonders umweltfreundlichen Betrieb zulässt. Das durch das Zurückfördern bewirkte Entleeren des Verdampfers kann, beispielsweise zur Vermeidung eines Biofoulings, für ein Spülen und/oder für ein Reinigen des Verdampfers verwendet werden.

Es ist eine Weiterbildung, dass folgend die Flüssigkeit mittels der mindestens einen Pumpe aus dem Flüssigkeitsreservoir in den Verdampfer gefördert wird, wobei die Flüssigkeit eine Reinigungsflüssigkeit ist, und dann in dem Verdampfer gehalten wird. Das Entleeren und Wiederbefüllen mit der Reinigungsflüssigkeit (z.B. einem Entkalkungsmittel) und folgende Halten bewirkt eine Reinigung, insbesondere Entkalkung, zumindest des Verdampfers. Ist eine Füllstandsdetektionseinrichtung vorhanden, kann diese ebenfalls gereinigt werden. Das Entleeren, Wiederbefüllen und Halten kann einmal oder mehrere Male nacheinander durchgeführt werden. Ein wiederholtes Entleeren, Wiederbefüllen und Halten verstärkt die Reinigungswirkung.

Die Reinigungswirkung kann verstärkt werden, falls der Verdampfer zumindest während des Haltens der Reinigungsflüssigkeit in dem Verdampfer aktiviert wird, da eine erhöhte Temperatur in vielen Fällen einen Reinigungsablauf verstärkt.

Es ist eine Weiterbildung, dass folgend auf ein Entleeren die Flüssigkeit mittels der mindestens einen Pumpe aus dem Flüssigkeitsreservoir in den Verdampfer gefördert wird, wobei die Flüssigkeit Wasser ist. Das Entleeren und Wiederbefüllen mit Wasser (im Wesentlichen ohne Reinigungszusätze) bewirkt ein Spülen zumindest des Verdampfers. Ist eine Füllstandsdetektionseinrichtung vorhanden, kann diese ebenfalls bespült werden. Das Entleeren und Wiederbefüllen kann einmal oder mehrere Male nacheinander durchgeführt werden. Ein wiederholtes Entleeren und Wiederbefüllen verstärkt die Spülwirkung.

Es ist noch eine Weiterbildung, dass bei dem Wiedereinfüllen zum Spülen und/oder zum Reinigen die Flüssigkeit bis über den Verdampfer hinaus gefördert wird. Dadurch kann der gesamte Verdampfer sicher entkalkt werden, vorzugsweise auch die Füllstandsdetektionseinrichtung.

Es ist noch eine weitere Weiterbildung, dass zunächst ein Reinigen des Verdampfers und dann ein Spülen des Verdampfers durchgeführt werden. Dazwischen müssen die Reinigungsflüssigkeit aus dem Flüssigkeitsreservoir entleert und dann Wasser (oder eine andere Spülflüssigkeit) in das Flüssigkeitsreservoir eingefüllt werden.

Es ist noch eine Ausgestaltung, dass das Dampferzeugungssystem eine Dampferzeugungseinheit für ein Haushaltsgerät umfasst, welche mindestens den Verdampfer, die Füllstandsdetektionseinheit, welche zu dem Durchlauferhitzer fluidisch parallel geschaltet ist, und einen Kondensatrücklauf aufweist.

Für einen effizienten und sicheren Betrieb des Verdampfers, insbesondere Durchlauferhitzers, sollte dessen Füllstand zumindest innerhalb eines vorbestimmten Bereichs gehalten werden. Dazu ist die Füllstandsdetektionseinheit vorgesehen, welche zumindest ein Erreichen eines vorbestimmten Füllstands erkennen kann. Die Füllstandsdetektionseinheit kann für eine präzise Bestimmung des Füllstands in der Dampferzeugungseinheit nach dem Prinzip der kommunizierenden Röhren mit der Dampferzeugungseinheit verbunden sein. Außerdem sollte für eine gute Dampfqualität sich zwischen dem Verdampfer und dem Garraum gebildetes Kondensat nicht in den Verdampfer zurückfließen, sondern in einen Kondensatrücklauf.

Ferner ist der Kondensatrücklauf vorzugsweise in die Füllstandsdetektionseinheit integriert. In anderen Worten dient die Füllstandsdetektionseinheit als der Kondensatrücklauf, in welchen das Kondensat zurückfließt. Der Kondensatrücklauf kann auch als ein Kondensatrücklaufbehälter oder als eine Kondensatauffangeinheit angesehen werden. Die funktionale Kombination der Füllstandsdetektionseinheit mit dem Kondensatrücklauf bewirkt eine besonders kompakte und preiswerte Bauform, da auf einen separaten Kondensatrücklauf verzichtet werden kann. Dabei wird eine Genauigkeit der Füllstandsbestimmung nicht oder nicht wesentlich beeinträchtigt.

Es ist noch eine Ausgestaltung, dass an einem Auslassende des Verdampfers ein Dampfauslasskanal angeschlossen ist, welcher im weiteren Verlauf in einen Dampfkanal übergeht, wobei ein Strömungsquerschnitt des Dampfkanals größer ist als ein Strömungsquerschnitt des Dampfauslasskanals. Durch den hinter dem Verdampfer zunächst geringen Strömungsquerschnitt wird dort eine hohe Strömungsgeschwindigkeit des Wasserdampfs erzeugt. Dies wiederum verhindert ein Rückfließen des Kondensats in den Verdampfer, da dieses durch den Wasserdampf ausgeblasen wird. Durch die folgende Erweiterung des Strömungsquerschnitts sinkt die Strömungsgeschwindigkeit des Wasserdampfs, so dass sich nun Kondensat bzw. Wassertropfen absetzen können, welche mit der Schwerkraft zurücklaufen. Dadurch werden ein Mitreißen von Kondensat und/oder eine Bildung von Kondensattröpfchen an einem Dampfeinlass zu einem Behandlungsraum des Haushaltsgeräts unterdrückt.

Es ist noch eine Ausgestaltung, dass ein Verhältnis des Strömungsquerschnitts des Dampfkanals zu dem Strömungsquerschnitt des Dampfauslasskanals mindestens 1,5 beträgt, insbesondere in einem Bereich zwischen 2,5 und 3,5 liegt. Dadurch wird eine sehr gute Verhinderung eines Kondensateintritts in den Verdampfer bei gleichzeitig ausreichender Kondensatabscheidung erreicht. Zudem bleibt hierbei die Strömungsgeschwindigkeit des Dampfs zu dem Dampfeinlass auch in dem größeren Strömungsquerschnitt für eine effektive Dampfeinleitung ausreichend hoch.

Es ist noch eine Ausgestaltung, dass der Dampfkanal einen Durchmesser in einem Bereich zwischen 15 mm und 20 mm aufweist und/oder der Dampfauslasskanal einen Durchmesser in einem Bereich zwischen 6 mm und 8 mm aufweist.

Es ist ferner eine Ausgestaltung, dass der Dampfkanal mit einem in einen Garraum führenden Dampfeinlass verbunden ist, wobei der Dampfeinlass einen bezüglich des Dampfkanals verringerten Strömungsquerschnitt aufweist, insbesondere einen um einen Faktor 0,25 bis 0,4 verringerten Strömungsquerschnitt. Diese Reduktion des Strömungsquerschnitts bewirkt, dass Kondensat und Wassertropfen zurückgehalten werden und nicht in den Behandlungsraum eindringen.

Es ist zudem eine Ausgestaltung, dass die Füllstandsdetektionseinheit dampfseitig mit einer Unterseite des Dampfkanals fluidisch verbunden ist. So kann zurückfließendes Kondensat ohne Behinderung und im Wesentlichen vollständig in den Kondensatrücklauf / die Füllstandsdetektionseinheit geleitet werden.

Es ist eine für eine besonders kompakte Bauweise bevorzugte Ausgestaltung, dass der Verdampfer schräg steht und die Füllstandsdetektionseinheit senkrecht steht.

Es ist auch eine Ausgestaltung, dass die Füllstandsdetektionseinheit mindestens einen Schwimmer aufweist, welcher mindestens einen Reedkontakt oder Reedschalter bei Annäherung schaltet. Der Schwimmer weist dazu mindestens ein magnetisches oder elektrisch leitendes Volumen auf. Durch diese Ausgestaltung kann eine relativ einfache und aufwandsarme und dennoch sehr zuverlässige Möglichkeit geschaffen werden, die jeweiligen Füllstände zu überprüfen. Darüber hinaus kann eine relativ verschleißarme und auch fehlerarme Ausgestaltung gewährleistet werden.

Es ist noch eine Ausgestaltung, dass die Dampferzeugungseinheit an einer Rückwand eines Behandlungsraums, insbesondere Garraums, angeordnet ist. Sie lässt sich dadurch einfach montieren, z.B. auf einem Montageträger vormontieren und dann mit dem Montageträger an der Rückwand befestigen.

Es ist noch eine weitere Ausgestaltung, dass die Dampferzeugungseinheit dampfseitig mit einem in einen Garraum führenden Dampfeinlass verbunden ist, wobei der Dampfeinlass an einem oberen Rand einer Rückwand des Behandlungsraums, insbesondere Garraums, oder an einer Decke des Behandlungsraums angeordnet ist. Durch diese Position des Dampfeinlasses kann der Behandlungsraum einfach mit dem Wasserdampf in einer ausreichend homogenen Konzentration ausgefüllt werden.

Es ist noch eine weitere Ausgestaltung, dass die Dampferzeugungseinheit einlassseitig mit einem Flüssigkeitsreservoir über die mindestens eine Pumpe hydraulisch verbunden ist, wobei das Flüssigkeitsreservoir oberhalb eines Behandlungsraums, insbesondere Garraums, angeordnet ist. So kann das Flüssigkeitsreservoir thermisch von dem Behandlungsraum entkoppelt werden.

Ein Weiterbildung betrifft ein Verfahren zum Erzeugen von Wasserdampf für ein Gargerät, insbesondere Dampfgarer, wobei mittels einer Dampferzeugungseinheit der Wasserdampf erzeugt wird, der erzeugte Wasserdampf zunächst durch einen Dampfauslasskanal mit einem geringeren Strömungsquerschnitt und dann durch einen Dampfkanal mit einem größeren Strömungsquerschnitt strömt und sich hinter dem Dampfauslasskanal bildendes Kondensat im Wesentlichen in eine Füllstandsdetektionseinheit fließt.

Es ist noch eine Weiterbildung, dass ein Füllstand in der Dampferzeugungseinheit dadurch reguliert wird, dass in der Füllstandsdetektionseinheit ein Schwimmer bei einem Erreichen eines unteren Füllstandsniveaus einen unteren Reedkontakt schaltet, worauf der Dampferzeugungseinheit Wasser zugeführt wird, bis der Schwimmer bei einem Erreichen eines oberen Füllstandsniveaus einen oberen Reedkontakt schaltet. Dadurch kann ein zwischen dem unteren Füllstandsniveau und dem oberen Füllstandsniveau befindlicher Füllstandsbereich mit hoher Genauigkeit eingehalten werden.

Es ist eine alternative Weiterbildung, dass ein Füllstand in der Dampferzeugungseinheit dadurch reguliert wird, dass in der Füllstandsdetektionseinheit ein Schwimmer bei einem Erreichen eines vorbestimmten Füllstandsniveaus einen Reedkontakt schaltet, worauf die Dampferzeugungseinheit für eine vorbestimmte Zeitdauer mit Wasser befüllt wird. So kann ein Reedkontakt oder Reedschalter eingespart werden.

Es ist noch eine alternative Weiterbildung, dass ein Füllstand in der Dampferzeugungseinheit dadurch reguliert wird, dass die Dampferzeugungseinheit mit Wasser befüllt wird, bis ein in der Füllstandsdetektionseinheit befindlicher Schwimmer bei einem Erreichen eines vorbestimmten Füllstandsniveaus einen Reedkontakt schaltet, worauf das Befüllen unterbrochen wird, wobei das Befüllen wieder aufgenommen wird, wenn eine vorbestimmte Wassermenge verdampft worden ist. So kann ebenfalls ein Reedkontakt oder Reedschalter eingespart werden.

In den folgenden Figuren wird die Erfindung anhand eines Ausführungsbeispiels schematisch genauer beschrieben. Dabei können zur Übersichtlichkeit gleiche oder gleichwirkende Elemente mit gleichen Bezugszeichen versehen sein.
- Fig.1: zeigt in Seitenansicht eine Dampferzeugungseinheit für ein Haushaltsgerät gemäß einer ersten Bauform; und
- Fig.2: zeigt in Frontalansicht eine Rückwand eines Haushaltsgeräts mit der daran angebrachten Dampferzeugungseinheit gemäß der ersten Bauform;
- Fig.3: zeigt in einer Ansicht schräg von der Seite eine Dampferzeugungseinheit für ein Haushaltsgerät gemäß einer zweiten Bauform;
- Fig.4: zeigt die Dampferzeugungseinheit mit einem ersten hydraulischen Kanalsystem zur Verbindung mit einem Flüssigkeitsreservoir in einer ersten Schaltstellung;
- Fig.5: zeigt die Dampferzeugungseinheit mit dem ersten hydraulischen Kanalsystem in einer zweiten Schaltstellung; und
- Fig.6: zeigt die Dampferzeugungseinheit mit einem zweiten hydraulischen Kanalsystem, welches nicht Teil der Erfindung ist, zur Verbindung mit dem Flüssigkeitsreservoir.

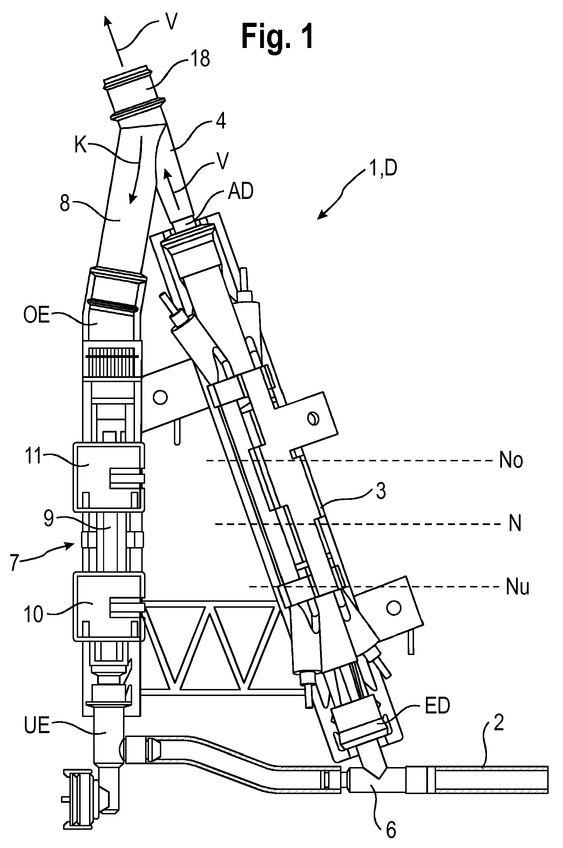

Fig.1 zeigt eine Dampferzeugungseinheit 1 für ein Haushaltsgerät in Form eines Dampfgargeräts D. Die Dampferzeugungseinheit 1 weist einen Zuflusskanal 2 auf, welcher zu einer Eingangsseite ED eines Verdampfers in Form eines Durchlauferhitzers 3 führt. An seiner Ausgangsseite AD ist der Durchlauferhitzer 3 mit einem Dampfauslasskanal 4 verbunden. Der Dampfauslasskanal 4 erweitert sich ab einer vorbestimmten Strecke hinter dem Durchlauferhitzer 3 (dampfabwärts) zu einem Dampfkanal 18. Durch den Zuflusskanal 2 in den Durchlauferhitzer 3 gelangendes Wasser wird in dem Durchlauferhitzer 3 unter Bildung von Wasserdampf V erhitzt und durch den Dampfauslasskanal 4 ausgegeben. Die Strömungsrichtung des Wasserdampfs V ist durch den zugehörigen Pfeil angedeutet. Das Wasser kann mittels einer weiter unten beschriebenen Pumpe 15 durch den Zuflusskanal 2 gefördert werden.

Vor der Eingangsseite ED des Durchlauferhitzers 3 befindet sich in dem Zuflusskanal 2 ein Verteilerstück 6, das an ein unteres Ende UE einer Füllstandsdetektionseinheit 7 hydraulisch angeschlossen ist. Ein oberes Ende OE der Füllstandsdetektionseinheit 7 ist über einen Kondensatrücklaufkanal 8 fluidisch mit dem Dampfkanal 18 verbunden, genauer gesagt öffnet sich der Kondensatrücklaufkanal 8 in eine Unterseite des Dampfkanals 18. Der Durchlauferhitzer 3 und die Füllstandsdetektionseinheit 7 sind somit nach dem Prinzip kommunizierender Röhren fluidisch parallel geschaltet und bilden hydraulisch eine Einheit. Der (geodätische) Füllstand N in dem Durchlauferhitzer 3 entspricht somit im Wesentlichen dem Füllstand in der Füllstandsdetektionseinheit 7. Während der Durchlauferhitzer 3 für eine kompakte Bauweise leicht schräg in Richtung der Füllstandsdetektionseinheit 7 ausgerichtet ist, steht die Füllstandsdetektionseinheit 7 senkrecht.

Die Füllstandsdetektionseinheit 7 weist ein Gehäuse 9 mit einem darin befindlichen Schwimmer (o.Abb.) auf, der auf dem Wasser schwimmt. Die Position des Schwimmers ist somit auch ein Maß für das Füllstandsniveau in dem Durchlauferhitzer 3. Der Schwimmer ist mit mindestens einem magnetischen Element ausgestattet. Die Füllstandsdetektionseinheit 7 weist ferner hier zwei an dem Gehäuse 9 zueinander beabstandet angeordnete Reedkontakte oder Reedschalter auf, nämlich einen unteren Reedkontakt 10 und einen oberen Reedkontakt 11. Die Reedkontakte 10 und 11 reagieren auf eine Annäherung des Schwimmers.

Während eines Betriebs sollte der Füllstand N in dem Durchlauferhitzer 3 zwischen einem unteren Füllstandsniveau Nu und einem oberen Füllstandsniveau No (optimaler Füllstandsbereich) gehalten werden, um eine hochgradig gleichmäßige Dampferzeugung und gute Dampfqualität (weitgehende Freiheit von Wassertröpfchen) zu gewährleisten. Das Einhalten des optimalen Füllstandsbereichs gewährleistet auch, dass der Durchlauferhitzer 3 einfach innerhalb eines bestimmten Temperaturbereiches bzw. auf eine vorbestimmte Temperatur geregelt werden kann. Bei einem Überschreiten des oberen Füllstandsniveaus No und/oder bei einem Unterschreiten des unteren Füllstandsniveaus Nu kann der Durchlauferhitzer 3 zudem beschädigt werden, z.B. durch ein Trockengehen bei dem Unterschreiten des unteren Füllstandsniveaus Nu. Das Einhalten des optimalen Füllstandsbereichs durch eine entsprechende Regelung der Füllstandshöhe als einer Regelgröße kann durch eine Erkennung der Füllstandshöhe mittels der Füllstandsdetektionseinheit 7 erreicht werden.

### Das Einhalten des optimalen Füllstandsbereichs kann auf mehrere Arten geschehen:

In einer Ausgestaltung ist die Füllstandsdetektionseinheit 7 wie gezeigt mit den beiden Reedkontakten 10 und 11 ausgestattet. Die Reedkontakte 10 und 11 werden über den magnetischen Schwimmer, der sich entsprechend dem Füllstand innerhalb der Füllstandsdetektionseinheit 7 bewegt, geschaltet. Steigt der Füllstand in der Füllstandsdetektionseinheit 7 bis zu dem oberen Füllstandsniveau No, schaltet der obere Reedkontakt 11, und eine Wasserzufuhr über den Zuflusskanal 2 wird unterbrochen, z.B. durch ein Stoppen der Pumpe. Dadurch wird eine Befüllung des Durchlauferhitzers 3 gestoppt. Sinkt andererseits der Füllstand in der Füllstandsdetektionseinheit 7 durch das Verdampfen bis auf das untere Füllstandsniveau Nu ab, schaltet der untere Reedkontakt 10, und eine Wasserzufuhr über den Zuflusskanal 2 wird wieder aufgenommen bzw. aktiviert.

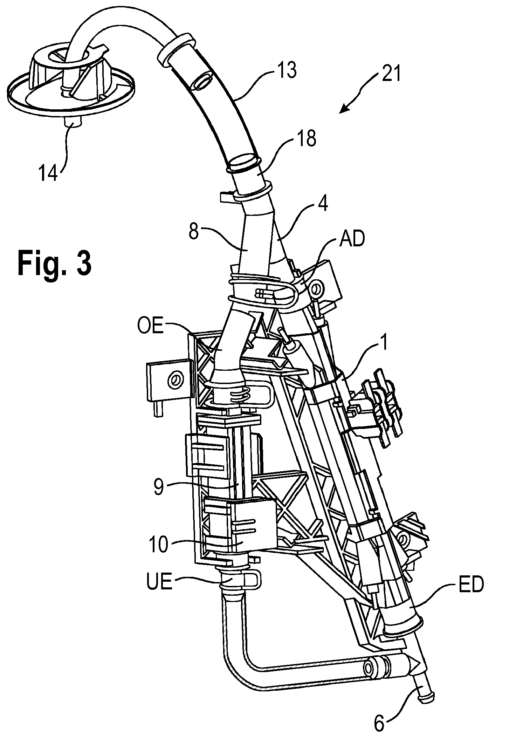

In einer alternativen Ausgestaltung ist es möglich, auch nur eine einzige Position des Schwimmers bzw. nur ein Schalten eines der Reedkontakte 10 und 11 zu detektieren und den zweiten Schaltpunkt der Pumpe über empirisch ermittelte Werte abzuleiten. So kann in einer ersten alternativen Ausgestaltung der Füllstand auf das obere Füllstandsniveau No steigen, worauf ein (oberer) Reedkontakt 11 schaltet und so die Wasserzufuhr bzw. die Befüllung gestoppt wird. Das Fallen des Füllstandes z.B. bis auf das untere Füllstandsniveau Nu (oder darüber) ergibt sich aus der verdampften Wassermenge. Die verdampfte Wassermenge wiederum lässt sich aus der Leistung des Durchlauferhitzers 3 (hier ca. 1100 Watt) und der eingeschalteten Zeitdauer des Durchlauferhitzers 3 abschätzen. Der Schaltpunkt für das Wiederbefüllen erfolgt folglich nicht durch ein Schalten eines (unteren) Reedkontakts 10, sondern nach einer gewissen Zeitdauer bei bekannter Verdampfungsleistung und folgend der Dampfmenge des Durchlauferhitzers 3. Eine zweite alternative Ausgestaltung ist in Fig.3 gezeigt.

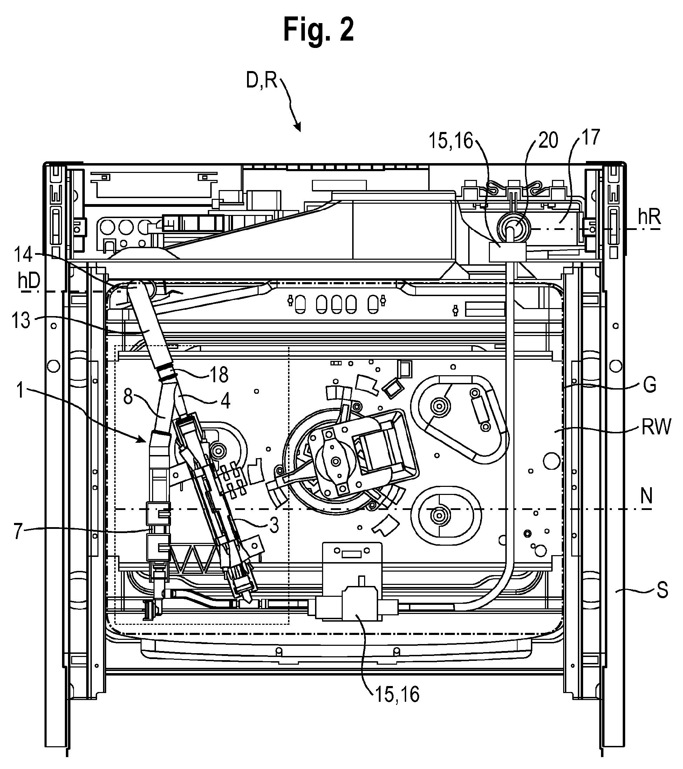

**Fig.2** zeigt in Frontalansicht eine Rückwand R des Dampfgargeräts D mit der daran angebrachten Dampferzeugungseinheit 1. Die Dampferzeugungseinheit 1 ist ausgangsseitig bzw. dampfseitig durch einen Verbindungsschlauch 13 mit einem in einen Garraum G führenden Dampfeinlass 14 verbunden. Die Kontur einer Rückwand RW des Garraums G ist hier gestrichpunktet angedeutet. Der Dampfeinlass 14 kann mit einer Düse ausgerüstet sein. Die Dampferzeugungseinheit 1 ist eingangsseitig über den Zuflusskanal 2 mit einer Pumpe 15 verbunden, welche bzw. welches wiederum mit einem Flüssigkeitsreservoir 17 verbunden ist. Die Pumpe 15 ist hier wie herkömmlich bekannt dazu vorgesehen, lediglich Flüssigkeit von dem Flüssigkeitsreservoir 17 zu der Dampferzeugungseinheit 1 zu fördern, aber nicht in die umgekehrte Richtung.

Ein Auslass 20 des Flüssigkeitsreservoirs 17 liegt auf einer Höhe hR geodätisch höher als die Pumpe 15, die Dampferzeugungseinheit 1 und der Dampfeinlass 14. Die Dampferzeugungseinheit und damit ein mittlerer Füllstand N der Dampferzeugungseinheit 1 liegen demgegenüber tiefer, während der Dampfeinlass 14 auf einer geodätischen Höhe hD liegt, welche tiefer liegt als die Höhe hR, aber höher als die Dampferzeugungseinheit 1 und deren Füllstand N.

Das Flüssigkeitsreservoir 17 ist insbesondere oberhalb des Garraums G angeordnet, so dass es einer nur geringen thermischen Belastung ausgesetzt ist. Das Flüssigkeitsreservoir 17 ist ferner benachbart zu oder in der Nähe einer Seitenwand S des Dampfgargeräts D angeordnet, z.B. einem rechtsseitigen Bereich (wie hier bei rückwärtiger Betrachtung gezeigt) oder einem linksseitigen Bereich. Von dem Flüssigkeitsreservoir 17 führt der Zuflusskanal 2 zunächst senkrecht nach unten bis zu einem unteren Randbereich der Rückwand RW des Garraums G und biegt dann waagerecht, entlang des unteren Rands der Rückwand RW, zu der anderen Seite ab (hier der linken Seite) ab. Auf der anderen Seite befindet sich an der Rückwand RW die Dampferzeugungseinheit 1, welche sich wieder im Wesentlichen nach oben in Richtung des Dampfeinlasses 14 erstreckt. Der Dampfeinlass 14 befindet sich an einem oberen Rand der Rückwand RW des Garraums G. Alternativ kann der Dampfeinlass 14 sich in einer Decke des Garraums G befinden.

Insgesamt weist das von dem Flüssigkeitsreservoir 17 bis zu dem Dampfeinlass 14 reichende Dampferzeugungssystem im Wesentlichen eine U-Form auf, welche in ihrer Mitte Platz für eine Montage weiterer Bauteile, z.B. eines Lüfters, lässt. Die Höhen des Flüssigkeitsreservoirs 17, der Dampferzeugungseinheit 1 und des Dampfeinlasses 14 zeigen eine Abfolge 'hoch-tief-mittel'. Alternativ kann das Dampferzeugungssystem im Wesentlichen eine V-Form aufweisen. Eine alternative Position der Pumpe 15 befindet sich direkt an dem Flüssigkeitsreservoir 17.

In einem Bereich zwischen dem Durchlauferhitzer 3 und dem Dampfeinlass 14 können sich aus Kondensat Wassertröpfchen bilden. Um zu vermeiden, dass diese Wassertröpfchen mit dem Wasserdampf V in Richtung des Dampfeinlasses 14 getrieben werden, schließt sich an den vergleichsweise kurzen Dampfauslasskanal 4 der Dampfkanal 18 mit seinem größeren Strömungsquerschnitt an, welcher wiederum an den Verbindungsschlauch 13 angeschlossen ist. Der Verbindungsschlauch 13 weist ebenfalls einen vergleichsweise großen Strömungsquerschnitt auf. Aufgrund des großen Strömungsquerschnitts des Dampfkanals 18 und des Verbindungsschlauchs 13 strömt der Wasserdampf V darin mit einer relativ geringen Geschwindigkeit, so dass die Wassertröpfchen aus Kondensat K nicht in Richtung des Dampfeinlasses 14 mitgerissen werden. Vielmehr laufen die Wassertröpfchen aufgrund der Schwerkraft in dem Verbindungsschlauch 13 und in dem Dampfkanal 18 gegen die Strömungsrichtung des Wasserdampfs V zurück und weiter durch den Kondensatrücklaufkanal 8 in die Füllstandsdetektionseinheit 7. Die Füllstandsdetektionseinheit 7 dient somit gleichzeitig als ein Kondensatrücklauf oder Kondensatauffangeinheit, wodurch eine besonders kompakte Bauform ermöglicht wird. Durch den vergleichsweise kleinen Strömungsquerschnitt des Dampfauslasskanals 4 wird in dessen Bereich eine hohe Strömungsgeschwindigkeit des Wasserdampfs V erreicht, was verhindert, dass kondensierte Wassertröpfchen zurück in den Durchlauferhitzer 3 gelangen. Dadurch wird verhindert, dass sich der aus dem Durchlauferhitzer 3 austretende Dampf V mit den Wassertröpfchen, die dann mitgerissen werden, vermischt und es so zu einer verschlechterten Dampfqualität kommt.

Fig.3 zeigt in einer Ansicht schräg von der Seite eine Dampferzeugungseinheit 21 für ein Haushaltsgerät gemäß einer zweiten Bauform. Im Gegensatz zu der Dampferzeugungseinheit 1 gemäß der ersten Bauform weist die Dampferzeugungseinheit 21 nun nur noch einen Reedkontakt 10 auf. Dabei schaltet der Reedkontakt 10 bei einem Erreichen des unteren Füllstandsniveaus Nu. Die Befüllung z.B. bis auf das obere Füllstandsniveau No (oder darunter) geschieht innerhalb eines bestimmten Zeitintervalls bzw. einer bestimmten Aktivierungszeitdauer der Pumpe bzw. allgemein durch ein zeitlich begrenztes Erzeugen eines Volumenflusses durch den Zuflusskanal 2.

Der Verbindungsschlauch 13 ist eingangsseitig mit dem Dampfkanal 18 verbunden und ausgangsseitig mit dem Dampfeinlass 14, welcher in Form einer Düse ausgestaltet ist.

Der sich direkt an das Auslassende oder die Ausgangsseite AD des Durchlauferhitzers 3 anschließende Dampfauslasskanal 4 weist einen Durchmesser von ca. 6 mm bis 8 mm auf, insbesondere von ca. 6 mm. Dieser vergleichsweise geringe Strömungsquerschnitt sorgt für eine hohe Strömungsgeschwindigkeit des Wasserdampfs V. Dies wiederum verhindert ein Rückfließen des Kondensats in den Durchlauferhitzer 3, da eventuell vorhandene Wassertropfen durch den Wasserdampf V "weggeblasen" werden.

Der Dampfkanal 18 und der Verbindungsschlauch 13 weisen beide eine Erweiterung des Strömungsquerschnittes im Vergleich zu dem Dampfauslasskanal 4 auf. Dadurch sinkt die Strömungsgeschwindigkeit des Wasserdampfs V, so dass sich nun Kondensat bzw. Wassertropfen absetzen können, welche mit der Schwerkraft zurücklaufen. Es wird bevorzugt, dass ein sich an den geringen Strömungsquerschnitt direkt hinter dem Durchlauferhitzer 3 anschließender erweiterter Strömungsquerschnitt (hier des Dampfkanals 18 und des Verbindungsschlauchs 13) durch einen Durchmesser von mindestens 10 mm realisiert wird. Insbesondere ist ein Durchmesser zwischen 15 mm und 20 mm bevorzugt.

An dem Dampfeinlass 14 zum Garraum G findet wieder eine Reduktion des Strömungsquerschnitts statt, wodurch Kondensat und Wassertropfen zurückgehalten werden und nicht in den Garraum G eindringen. Bevorzugt wird ein Durchmesser des Dampfauslasses von 8 mm oder weniger, insbesondere von ca. 6 mm.

Der Kondensatrücklaufkanal 8 weist einen Durchmesser von mindestens 8 mm, insbesondere mindestens 10 mm auf, damit das Kondensat ungehindert und im Wesentlichen vollständig in die Füllstandsdetektionseinheit 7 zurückfließen kann.

Sowohl die Dampferzeugungseinheit 1 gemäß der ersten Bauform als auch die Dampferzeugungseinheit 21 gemäß der zweiten Bauform zeichnen sich durch eine sehr gute Dampfqualität aus, bei welcher der erzeugte bzw. ausgelassene Dampf keine oder eine nur geringe Menge an Wassertropfen aufweist. Zudem ist ein gleichmäßiger Betrieb der Dampferzeugung möglich, da der Füllstand gleichmäßig (im Wesentlichen konstant oder innerhalb eines vorbestimmten Bereichs) eingehalten werden kann. Aufgrund des gleichmäßigen Füllstands ist auch eine Temperaturregelung des Durchlauferhitzers 3 leicht möglich. Ferner wird die Befüllung des Durchlauferhitzers 3 auf eine einfache und robuste Weise ermöglicht. Die Befüllung des Durchlauferhitzers 3 ist regelbar. Die Gefahr, dass der Durchlauferhitzers 3 überläuft oder mit zu wenig Wasser beschickt wird (trockengeht), wird ausgeschlossen.

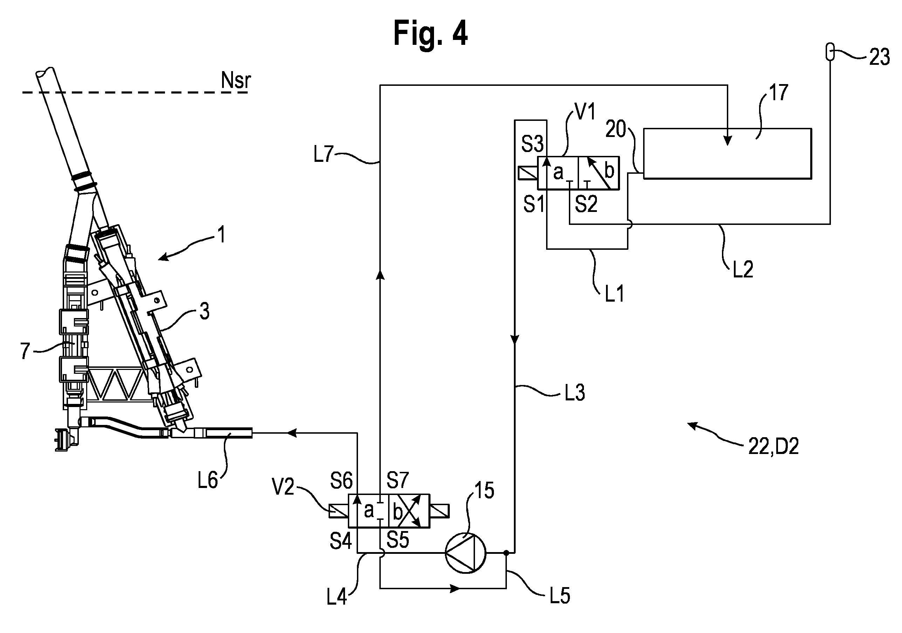

**Fig.4** zeigt ein Dampferzeugungssystem 22 eines Dampfgargeräts D2 gemäß einer erfindungsgemäßen Ausführungsform, bei der die Dampferzeugungseinheit 1, und dabei insbesondere der Verdampfer 3, mittels einer anderen Konfiguration mit dem Flüssigkeitsreservoir 17 verbunden ist. Im Einzelnen ist der Auslass 20 des Flüssigkeitsreservoirs 17 über eine erste Leitung L1 mit einem ersten Anschluss S1 eines ersten Ventils V1 verbunden, und ein Lufteinlass 23 ist über eine zweite Leitung L2 mit einem zweiten Anschluss S2 des ersten Ventils V1 verbunden. Ein dritter Anschluss S3 des ersten Ventils V1 ist über eine dritte Leitung L3 mit einer Saugseite der Pumpe 15 verbunden. Das erste Ventil V1 ist also als ein 3/2-Wege-Ventil ausgestaltet.

Eine Druckseite der Pumpe 15 ist über eine vierte Leitung L4 mit einem ersten Anschluss S4 eines zweiten Ventils V2 verbunden, während ein zweiter Anschluss S5 des zweiten Ventils V2 über eine fünfte Leitung L5 mit der Saugseite der Pumpe verbunden ist. Ein dritter Anschluss S6 des zweiten Ventils V2 ist über eine sechste Leitung L6 mit der Dampferzeugungseinheit 1 verbunden, und ein vierter Anschluss S7 des zweiten Ventils V2 führt über eine siebte Leitung L7 zurück zu dem Flüssigkeitsreservoir 17. Das zweite Ventil V2 ist als ein 4/2-Wege-Ventil ausgestaltet.

Eine gezeigte erste Schaltstellung a des Dampferzeugungssystems 22 wird durch eine entsprechende Stellung a der Ventile V1 und V2 bestimmt. In der ersten Schaltstellung a ist das erste Ventil V1 so geschaltet, dass der erste Anschluss S1 mit dem dritten Anschluss S3 verbunden ist, während der zweite Anschluss S2 blockiert ist. In der ersten Schaltstellung a ist das zweite Ventil V2 so geschaltet, dass der erste Anschluss S4 mit dem dritten Anschluss S6 verbunden ist, während der zweite Anschluss S5 mit dem vierten Anschluss S7 verbunden ist. Die Verbindung zwischen dem zweiten Anschluss S5 und dem vierten Anschluss S7 ist unterbrochen. Somit ist insgesamt der Auslass 20 des Flüssigkeitsreservoirs 17 über die erste Leitung L1, das Ventil V1, die dritte Leitung L3, die Pumpe 15, die vierte Leitung, das zweite Ventil V2 und die sechste Leitung L6 mit der Dampferzeugungseinheit 1 verbunden. Bei Betrieb der Pumpe 15 wird Flüssigkeit aus dem Flüssigkeitsreservoir 17 zu der Dampferzeugungseinheit 1 gefördert. Es kann keine Luft über den Lufteinlass 23 in die dritte Leitung L3 eintreten, und es wird auch keine Flüssigkeit über die siebte Leitung L7 zurück in das Flüssigkeitsreservoir 17 gefördert.

In der ersten Schaltstellung a kann das Dampferzeugungssystem 22 normal betrieben werden, falls sich Wasser (ggf. mit Zusätzen für einen Garprozess, wie Aromen usw.) in dem Flüssigkeitsreservoir 17 befindet.

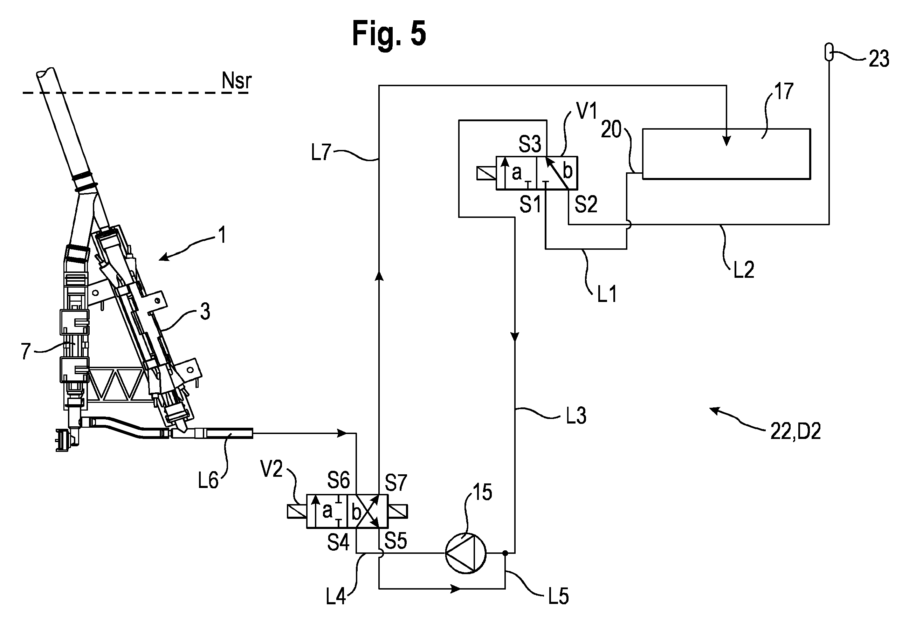

**Fig.5** zeigt das Dampferzeugungssystem 22 in der zweiten Schaltstellung b, welche durch eine entsprechende Stellung b der Ventile V1 und V2 bestimmt ist. In der zweiten Schaltstellung b ist das erste Ventil V1 so geschaltet, dass der erste Anschluss S1 blockiert ist, während der zweite Anschluss S2 mit dem dritten Anschluss S3 verbunden ist. In der zweiten Schaltstellung b ist das zweite Ventil V2 so geschaltet, dass der erste Anschluss S4 mit dem vierten Anschluss S7 verbunden ist, während der zweite Anschluss S5 mit dem dritten Anschluss S6 verbunden ist. Somit ist insgesamt nun der Lufteinlass 23 über die erste Leitung L1, das erste Ventil V1, die dritte Leitung L3, die Pumpe 15, die vierte Leitung L4, das zweite Ventil V2 und die siebte Leitung L7 mit einem Einlass des Flüssigkeitsreservoirs 17 verbunden. Gleichzeitig ist die Dampferzeugungseinheit 1 über die sechste Leitung L6, das zweite Ventil V2 und die fünfte Leitung L5 ebenfalls mit der Saugseite der Pumpe 15 verbunden, und weiter über die Pumpe 15 und die siebte Leitung L7 mit dem Flüssigkeitsreservoir 17.

In der zweiten Schaltstellung b wird Flüssigkeit von der Dampferzeugungseinheit 1 durch die Pumpe 15 in das Flüssigkeitsreservoir 17 gefördert und so die Dampferzeugungseinheit 1 entleert. Gleichzeitig saugt die Pumpe 15 Luft aus dem Lufteinlass 23 ein und entleert so zunächst die zweite Leitung L2 und die dritte Leitung L3. Gleichzeitig werden die Dampferzeugungseinheit 1 und die sechste Leitung L6 entleert, da die Dampferzeugungseinheit dampfseitig mit dem Dampfeinlass 24 und folglich ebenfalls mit Luft verbunden ist. Sind diese beiden Zweige entleert, wird folgend auch die siebte Leitung L7 entleert bzw. belüftet. Dabei ist ein Strömungsquerschnitt der siebten Leitung L7, der Rückleitung, so klein, dass das Fördervolumen der Pumpe 15 ausreicht, um die in der siebten Leitung L7 vorhandene Flüssigkeit im Wesentlichen vollständig über den Luftfördervolumenstrom der Pumpe aus der siebten Leitung L7 zu pressen.

Die Schaltstellungen a und b können für verschiedene Betriebsprogramme verwendet werden.

So kann die Schaltstellung b dazu verwendet werden, das Dampferzeugungssystem 22 weitgehend zu entleeren bzw. zu belüften, z.B. um eine Bildung von Keimen und anderen Organismen im stehenden Wasser zu vermeiden, z.B. vor einer längeren Inaktivität wie einem Urlaub.

Für ein Spülprogramm können beispielsweise die Schaltstellungen a und b abwechselnd verwendet werden. Insbesondere kann beispielsweise als ein erster Schritt die Pumpe 15 in der zweiten Schaltstellung b betrieben werden, um die Dampferzeugungseinheit 1 zu leeren. Dadurch kann insbesondere in der (geodätisch) unterhalb des Verdampfers 3 liegenden sechsten Leitung L6 befindliches, besonders kalkhaltiges Wasser ("Kalksumpf") abgesaugt werden. Der Kalksumpf ist typischerweise besonders kalkhaltig aufgrund von aus dem Verdampfer 3 (oder einem vorgeschalteten Filter) heruntersinkenden abgeplatzten Kalkstückchen und aufgrund der Tatsache, dass im Wasser schwebender feiner Kalk nach unten sinkt. Der Kalksumpf wird weiter in das Flüssigkeitsreservoir 17 gepumpt, wobei sich der Kalksumpf verdünnt. Dazu ist zu Beginn des Spülvorgangs das Flüssigkeitsreservoir 17 vorzugsweise bereits mit Wasser gefüllt. Folgend wird das Dampferzeugungssystem 22 in die Schaltstellung a umgeschaltet, und die Dampferzeugungseinheit 1 wird wieder mit (nun geringer kalkhaltigem) Wasser aus dem Flüssigkeitsreservoir 17 befüllt. Dieser Ablauf mit wechselnder Schaltstellung kann einmal oder mehrere Male durchgeführt werden. Ein mehrmaliges Entleeren und Befüllen verbessert die Spülwirkung. Am Ende des Spülprogramms kann das Flüssigkeitsreservoir 17 durch einen Nutzer entleert und wieder mit Frischwasser befüllt werden. Selbstverständlich können die Dampferzeugungseinheit 1 und die entsprechenden Leitungen L1 - L7 auch zu anderen Zwecken gespült werden. Es ist für ein vollständiges Spülen vorteilhaft, wenn ein maximaler Füllstand Nsr des Spülprogramms über die Dampferzeugungseinheit 1 hinaussteigt, aber nicht die (geodätische) Höhe des Dampfeinlasses 24 erreicht.

Für ein Reinigungsprogramm können analog zu dem Spülprogramm ebenfalls die Schaltstellungen a und b abwechselnd verwendet werden, wobei das Flüssigkeitsreservoir 17 nun mit einer Reinigungsflüssigkeit, z.B. einem Entkalkungsmittel, gefüllt ist. Dieses wird nach dem Entleeren in Schaltstellung b in der Schaltstellung a durch die entsprechenden Leitungen, Ventile V1 und V2 und die Dampferzeugungseinheit 1 eingefüllt und bewirkt eine entsprechende Reinigung, insbesondere Entkalkung. Für eine gründliche Entkalkung des Verdampfers 3 kann die Reinigungsflüssigkeit für eine vorbestimmte Zeitdauer in dem Verdampfer 3 (und damit auch in der Füllstandsdetektionseinheit 7) gehalten werden. Für eine schnelle Entkalkung kann der Verdampfer 3 vorzugsweise bestromt werden, wenn er mit der Reinigungsflüssigkeit befüllt ist. Ein mehrmaliges Entleeren und Befüllen verbessert die Reinigungswirkung, da verbrauchtes Reinigungsmittel ersetzt wird. Das Reinigungsprogramm wird bevorzugt mit einem Entleerungsablauf beendet. Nach Beendigung des Reinigungsprogramms kann das Flüssigkeitsreservoir 17 durch einen Nutzer entleert, gespült und wieder mit Frischwasser befüllt werden. Es ist für ein vollständiges Reinigen vorteilhaft, wenn der maximale Füllstand Nsr der Reinigungsflüssigkeit über die Dampferzeugungseinheit 1 ansteigt, aber nicht die (geodätische) Höhe des Dampfeinlasses 24 erreicht.

Es ist zum im Wesentlichen vollständigen Entfernen der Reinigungsflüssigkeit vorteilhaft, wenn sich an den Reinigungsablauf ein Spülablauf anschließt.

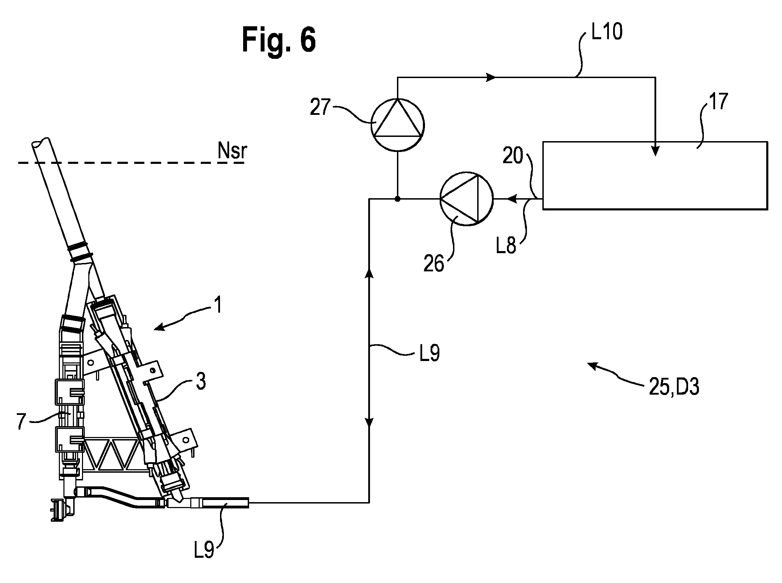

**Fig.6** zeigt ein Dampferzeugungssystem 25 eines Dampfgargeräts D3 gemäß einer Ausführungsform, die nicht Teil der Erfindung ist, bei der die Dampferzeugungseinheit 1, und dabei insbesondere der Verdampfer 3, mittels noch einer anderen Konfiguration mit dem Flüssigkeitsreservoir 17 fluidisch verbunden ist. Im Einzelnen ist der Auslass 20 des Flüssigkeitsreservoirs 17 über eine erste Leitung L8 mit einer Saugseite einer ersten Pumpe 26 verbunden. Eine Druckseite der ersten Pumpe 26 ist über eine zweite Leitung L9 mit der Dampferzeugungseinheit 1, insbesondere Verdampfer 3, verbunden. Die zweite Leitung L9 verzweigt zu einer Saugseite einer zweiten Pumpe 27. Die Druckseite der zweiten Pumpe 27 ist über eine dritte Leitung L10 mit dem Flüssigkeitsreservoir 17 verbunden. Die unterschiedlichen Schaltstellungen des Dampferzeugungssystems 25 können durch ein wechselseitiges Betreiben und Anhalten der beiden Pumpen 26 und 27 erreicht werden.

So kann die erste Schaltstellung a des Dampferzeugungssystems 25 durch einen Betrieb der ersten Pumpe 26 bei gleichzeitig angehaltener zweiter Pumpe 27 gekennzeichnet sein. Dabei wird Flüssigkeit aus dem Flüssigkeitsreservoir 17 über die erste Leitung L8, durch die erste Pumpe 26 und durch die zweite Leitung L9 zu der Dampferzeugungseinheit 1 gefördert. Die angehaltene zweite Pumpe 27 versperrt den Zugang zu der dritten Leitung L10. In der ersten Schaltstellung a kann das Dampferzeugungssystem 22 normal zur Dampferzeugung betrieben werden, falls sich Wasser (ggf. mit Zusätzen für einen Garprozess, wie Aromen usw.) in dem Flüssigkeitsreservoir 17 befindet.

Die zweite Schaltstellung b des Dampferzeugungssystems 25 ist dann durch einen Betrieb der zweiten Pumpe 27 bei gleichzeitig angehaltener erster Pumpe 26 gekennzeichnet sein. Dabei wird Flüssigkeit aus der Dampferzeugungseinheit 1, durch die zweite Leitung L9, durch die zweite Pumpe 27 und durch die dritte Leitung L10 zu dem Flüssigkeitsreservoir 17 gefördert. Die angehaltene erste Pumpe 26 versperrt den Zugang zu der ersten Leitung L8. In der ersten Schaltstellung b kann die Dampferzeugungseinheit 1 entleert werden.

Diese Ausgestaltung weist den Vorteil auf, dass sie nur wenige hydraulisch anzuschließende Teile bzw. Anschlussstellen aufweist und somit eine erhöhte Lecksicherheit. Auch ist eine Schaltung zwischen den Schaltzuständen a und b besonders einfach.

Selbstverständlich ist die vorliegende Erfindung nicht auf das weiter oben gezeigte Ausführungsbeispiel beschränkt, sondern wird ausschließlich durch die unabhängigen Ansprüche definiert.

Allgemein können Merkmale der verschiedenen Ausführungsformen und Varianten auch kombiniert werden. Beispielweise kann die Saugseite der ersten Pumpe 26 des Dampfgargeräts D3 optional auf eine zu dem Dampfgargerät D2 analoge Weise über ein Ventil wahlweise mit dem Flüssigkeitsreservoir 17 oder dem Lufteinlass verbunden werden.

Auch kann anstelle eines Durchlauferhitzers ein Boiler verwendet werden.

Auch kann zwischen der sechsten Leitung L6 und dem Verdampfer 3 und/oder hinter bzw. oberhalb der Füllstandsdetektionseinheit jeweils ein Filter angeordnet sein, welche(r) zum Spülen und/oder Reinigen vorgesehen sein kann.

Auch kann auf eine eigene Füllstandsdetektionseinheit verzichtet werden und der Füllstand z.B. durch ein entsprechendes Detektionsmittel in dem Wassertank ermittelt werden.

Unter dem Dampfgargerät D2 oder D3 kann insbesondere ein dedizierter Dampfgarer oder eine Ofen/Dampfgar-Kombination verstanden werden, insbesondere auch ein Backofen mit einer Dampfgarfunktion.

### Die Erfindung weist allgemein die Vorteile auf, dass

- durch die Rückpumpung in das Flüssigkeitsreservoir (Tank) beim Reinigungs-, Spül- und Entleerungsprozess ein aufwändiges Ablassen von Reinigungsflüssigkeit oder Spülwasser durch einen Ablauf entfällt, und zwar herkömmlicherweise meist in separate Gefäße, die z.B. in ein Backrohr oder unter andere Ablasspositionen gestellt werden müssen;
- die Entnahme der Spül- und Reinigungsflüssigkeit sehr einfach ist, da sie mit dem originären Flüssigkeitsreservoir erfolgen kann;
- das Umschalten zwischen den Schaltzuständen automatisiert erfolgen kann, und also ohne Handhabungsmehraufwand durch den Benutzer;
- durch den Entleerungsprozess das System im Wesentlichen vollständig entleert werden kann, so dass dabei kein oder eine nur geringe Menge an Flüssigkeit in dem System zurückbleibt, wodurch hygienische Probleme vermieden werden; und
- in Summe die Vorgänge für den Benutzer einfacher und leichter zu verstehen sind.

### Bezugszeichenliste

- 1: Dampferzeugungseinheit
- 2: Zuflusskanal
- 3: Verdampfer
- 4: Dampfauslasskanal
- 6: Verteilerstück
- 7: Füllstandsdetektionseinheit
- 8: Kondensatrücklaufkanal
- 9: Gehäuse
- 10: unterer Reedkontakt
- 11: oberer Reedkontakt
- 13: Verbindungsschlauch
- 14: Dampfeinlass
- 15: Pumpe
- 17: Flüssigkeitsreservoir
- 18: Dampfkanal
- 20: Auslass des Flüssigkeitsreservoirs
- 21: Dampferzeugungseinheit
- 22: Dampferzeugungssystem
- 23: Lufteinlass
- 24: Dampfeinlass
- 25: Dampferzeugungssystem
- 26: erste Pumpe
- 27: zweite Pumpe
- a: Schaltzustand
- b: Schaltzustand
- AD: Ausgangsseite
- D: Dampfgargerät
- D2: Dampfgargerät
- D3: Dampfgargerät
- ED: Eingangsseite
- G: Garraum
- hR: Höhe des Flüssigkeitsreservoirs
- hD: Höhe des Dampfeinlasses
- K: Kondensat
- Ln: n-te Leitung
- N: Füllstand in dem Durchlauferhitzer
- No: oberes Füllstandsniveau
- Nu: unteres Füllstandsniveau
- Nsr: maximales Füllstandsniveau
- OE: oberes Ende
- R: Rückwand des Dampfgargeräts
- RW: Rückwand des Garraums
- S: Seitenwand des Dampfgargeräts
- S1: erster Anschluss des ersten Ventils
- S2: zweiter Anschluss des ersten Ventils
- S3: dritter Anschluss des ersten Ventils
- S4: erster Anschluss des zweiten Ventils
- S5: zweiter Anschluss des zweiten Ventils
- S6: dritter Anschluss des zweiten Ventils
- S7: vierter Anschluss des zweiten Ventils
- UE: unteres Ende
- V: Wasserdampf
- V1: erstes Ventil
- V2: zweites Ventil

## Patentansprüche

1. Dampferzeugungssystem (22; 25) für ein Haushaltsgerät (D2; D3), insbesondere Dampfgargerät, mindestens aufweisend ein entleerbares Flüssigkeitsreservoir (17), einen aus dem Flüssigkeitsreservoir (17) mit Flüssigkeit versorgbaren Verdampfer (3) und mindestens eine Pumpe (15; 26, 27) zum Fördern der Flüssigkeit, wobei die Flüssigkeit mittels der mindestens einen Pumpe (15; 27) in Richtung des Flüssigkeitsreservoirs (17) rückförderbar ist,
**dadurch gekennzeichnet, dass**
das Dampferzeugungssystem (22) eine Pumpe (15) für beide Förderrichtungen aufweist, wobei die Pumpe (15) wahlweise mit ihrer Druckseite oder ihrer Saugseite mit dem Verdampfer (3) fluidisch verbindbar ist und mit ihrer jeweils anderen Seite mit dem Flüssigkeitsreservoir (17) verbindbar ist.

2. Dampferzeugungssystem (22) nach Anspruch 1, **dadurch gekennzeichnet, dass** das Dampferzeugungssystem (22) mindestens zwischen einem ersten Schaltzustand (a) und einem zweiten Schaltzustand (b) umschaltbar ist, wobei
- in dem ersten Schaltzustand (a) die Pumpe (15) mit ihrer Druckseite mit dem Verdampfer (3) fluidisch verbunden ist und mit ihrer Saugseite mit dem Flüssigkeitsreservoir (17) verbunden ist und
- in dem zweiten Schaltzustand (b) die Pumpe (15) mit ihrer Saugseite mit dem Verdampfer (3) fluidisch verbunden ist und mit ihrer Druckseite mit dem Flüssigkeitsreservoir (17) verbunden ist.

3. Dampferzeugungssystem (22; 25) nach Anspruch 2, **dadurch gekennzeichnet, dass** die Pumpe (15; 26) an ihrer Saugseite wahlweise mit dem Flüssigkeitsreservoir (17) oder mit einem Lufteinlass (23) fluidisch verbindbar ist und in dem zweiten Schaltzustand (b) mit dem Lufteinlass (23) fluidisch verbunden ist.

4. Dampferzeugungssystem (22; 25) nach Anspruch 3, **dadurch gekennzeichnet, dass** das Dampferzeugungssystem (22) dazu eingerichtet ist, die Pumpe (15; 27) zu betreiben, wenn sich das Dampferzeugungssystem (22) in dem zweiten Schaltzustand (b) befindet.

5. Dampferzeugungssystem (22; 25) nach einem der Ansprüche 2 bis 4, **dadurch gekennzeichnet, dass** das Dampferzeugungssystem (22; 25) dazu eingerichtet ist, zwischen dem ersten Schaltzustand (a) und dem zweiten Schaltzustand (b) umzuschalten und in jedem der beiden Schaltzustände (a, b) die zugehörige Pumpe (15; 26, 27) zumindest zeitweilig zu betreiben.

6. Dampferzeugungssystem (22; 25) nach Anspruch 5, **dadurch gekennzeichnet, dass** das Flüssigkeitsreservoir (17) mit Reinigungsflüssigkeit gefüllt ist und das Dampferzeugungssystem (22) dazu eingerichtet ist, in dem ersten Schaltzustand (a) die Pumpe (15) zeitweilig zu betreiben und folgend nicht zu betreiben.

7. Dampferzeugungssystem (22; 25) nach Anspruch 6, **dadurch gekennzeichnet, dass** das Dampferzeugungssystem (22; 25) dazu eingerichtet ist, den Verdampfer (3) zumindest in dem ersten Schaltzustand (a) zu betreiben.

8. Dampferzeugungssystem (22; 25) nach einem der Ansprüche 1 bis 7, **dadurch gekennzeichnet, dass** das Flüssigkeitsreservoir (17) mit Wasser gefüllt ist.

9. Dampferzeugungssystem (22; 25) nach einem der vorhergehenden Ansprüche, **dadurch gekennzeichnet, dass** dem Verdampfer (3) eine Füllstandsdetektionseinrichtung (7) fluidisch parallel geschaltet ist.

10. Dampferzeugungssystem (22; 25) nach einem der vorhergehenden Ansprüche, **dadurch gekennzeichnet, dass** das Flüssigkeitsreservoir (17) entnehmbar ist.

11. Dampferzeugungssystem (22; 25) nach einem der vorhergehenden Ansprüche, **dadurch gekennzeichnet, dass** der Verdampfer (3) ein Durchlauferhitzer ist.

12. Verfahren zum Betreiben eines Dampferzeugungssystems (22; 25) mit einem Flüssigkeitsreservoir (17), einem aus dem Flüssigkeitsreservoir (17) versorgbaren Verdampfer (3) und einer Pumpe (15; 26, 27) zum Fördern der Flüssigkeit, wobei zum Entleeren mindestens des Verdampfers (3) die Flüssigkeit mittels der Pumpe (15; 27) aus dem Verdampfer (3) in das Flüssigkeitsreservoir (17) zurückgefördert wird,
**dadurch gekennzeichnet, dass**
die Pumpe (15) Flüssigkeit in beide Förderrichtungen pumpt, wozu die Pumpe (15) wahlweise mit ihrer Druckseite oder ihrer Saugseite mit dem Verdampfer (3) fluidisch verbindbar ist und mit ihrer jeweils anderen Seite mit dem Flüssigkeitsreservoir (17) verbindbar ist.

13. Verfahren nach Anspruch 12, **dadurch gekennzeichnet, dass** folgend Flüssigkeit mittels der einen Pumpe (15; 26) aus dem Flüssigkeitsreservoir (17) in den Verdampfer (3) gefördert wird, wobei die Flüssigkeit Wasser ist.

14. Verfahren nach Anspruch 12, **dadurch gekennzeichnet, dass** folgend Flüssigkeit mittels der Pumpe (15; 26) aus dem Flüssigkeitsreservoir (17) in den Verdampfer (3) gefördert wird, wobei die Flüssigkeit eine Reinigungsflüssigkeit ist, und dann in dem Verdampfer (3) gehalten wird.

## Claims

1. System for generating steam (22; 25) for a domestic appliance (D2; D3), in particular steam cooker, at least having a drainable liquid reservoir (17), an evaporator (3) which can be supplied with liquid from the liquid reservoir (17) and at least one pump (15; 26, 27) for conveying the liquid, wherein the liquid can be fed back in the direction of the liquid reservoir (17) by means of the at least one pump (15; 27),
**characterised in that**
the system for generating steam (22) has a pump (15) for both directions of flow, wherein the pump (15) can optionally be fluidically connected with its pressure face or its intake side to the evaporator (3) and can be connected with its respective other side to the liquid reservoir (17).

2. System for generating steam (22) according to claim 1, **characterised in that** the system for generating steam (22) can be switched at least between a first switching state (a) and a second switching state (b), wherein
- in the first switching state (a) the pump (15) is fluidically connected with its pressure face to the evaporator (3) and is connected with its intake side to the liquid reservoir (17) and
- in the second switching state (b) the pump (15) is fluidically connected with its intake side to the evaporator (3) and is connected with its pressure face to the liquid reservoir (17).

3. System for generating steam (22; 25) according to claim 2, **characterised in that** the pump (15; 26) can optionally be fluidically connected on its intake side to the liquid reservoir (17) or to an air inlet (23) and is fluidically connected in the second switching state (b) to the air inlet (23).

4. System for generating steam (22; 25) according to claim 3, **characterised in that** the system for generating steam (22) is configured to operate the pump (15; 27) if the system for generating steam (22) is disposed in the second switching state (b).

5. System for generating steam (22; 25) according to one of claims 2 to 4, **characterised in that** the system for generating steam (22; 25) is configured to switch between the first switching state (a) and the second switching state (b) and in each of the two switching states (a, b) to operate the associated pump (15; 26, 27) at least intermittently.

6. System for generating steam (22; 25) according to claim 5, **characterised in that** the liquid reservoir (17) is filled with cleaning fluid and the system for generating steam (22) is configured to operate and then not operate the pump (15) intermittently in the first switching state (a).

7. System for generating steam (22; 25) according to claim 6, **characterised in that** the system for generating steam (22; 25) is configured to operate the evaporator (3) at least in the first switching state (a).

8. System for generating steam (22; 25) according to one of claims 1 to 7, **characterised in that** the liquid reservoir (17) is filled with water.

9. System for generating steam (22; 25) according to one of the preceding claims, **characterised in that** a fill level detection device (7) is connected fluidically in parallel with the evaporator (3).

10. System for generating steam (22; 25) according to one of the preceding claims, **characterised in that** the liquid reservoir (17) can be removed.

11. System for generating steam (22; 25) according to one of the preceding claims, **characterised in that** the evaporator (3) is a continuous-flow water heater.

12. Method for operating a system for generating steam (22; 25) having a liquid reservoir (17), an evaporator (3) which can be supplied from the liquid reservoir (17) and a pump (15; 26, 27) for conveying the liquid, wherein in order to drain at least the evaporator (3) the liquid is conveyed back into the liquid reservoir (17) from the evaporator (3) by means of the pump (15; 27),
**characterised in that**
the pump (15) pumps liquid in both directions of flow, to which end the pump (15) can optionally be fluidically connected with its pressure face or its intake side to the evaporator (3) and can be connected with its respective other side to the liquid reservoir (17).

13. Method according to claim 12, **characterised in that** liquid is then conveyed into the evaporator (3) from the liquid reservoir (17) by means of the one pump (15; 26), wherein the liquid is water.

14. Method according to claim 12, **characterised in that** liquid is then conveyed into the evaporator (3) from the liquid reservoir (17) by means of the pump (15; 26), wherein the liquid is a cleaning fluid, and is then retained in the evaporator (3).

## Revendications

1. Système de production de vapeur (22 ; 25) pour un appareil ménager (D2 ; D3), notamment un appareil de cuisson à vapeur, comprenant au moins un réservoir de liquide (17) vidangeable, un évaporateur (3) alimentable en liquide à partir du réservoir de liquide (17) et au moins une pompe (15 ; 26, 27) pour transporter le liquide, le liquide pouvant être refoulé en direction du réservoir de liquide (17) au moyen de la au moins une pompe (15 ; 27),
**caractérisé en ce que**
le système de production de vapeur (22) comprend une pompe (15) pour les deux directions de transport, la pompe (15) pouvant être reliée fluidiquement à l'évaporateur (3), soit par son côté refoulement ou son côté aspiration, et être reliée au réservoir de liquide (17) par son autre côté respectif.

2. Système de production de vapeur (22) selon la revendication 1, **caractérisé en ce que** le système de production de vapeur (22) est commutable au moins entre un premier état de commutation (a) et un deuxième état de commutation (b),
- dans le premier état de commutation (a), la pompe (15) étant reliée fluidiquement à l'évaporateur (3) par son côté refoulement et étant reliée au réservoir de liquide (17) par son côté aspiration et
- dans le deuxième état de commutation (b), la pompe (15) étant reliée fluidiquement à l'évaporateur (3) par son côté aspiration et étant reliée au réservoir de liquide (17) par son côté refoulement.

3. Système de production de vapeur (22 ; 25) selon la revendication 2, **caractérisé en ce que** la pompe (15 ; 26) peut être reliée fluidiquement soit au réservoir de liquide (17) ou à une admission d'air (23) sur son côté aspiration et est reliée fluidiquement à l'admission d'air (23) dans le deuxième état de commutation (b).

4. Système de production de vapeur (22 ; 25) selon la revendication 3, **caractérisé en ce que** le système de production de vapeur (22) est adapté pour faire fonctionner la pompe (15 ; 27) lorsque le système de production de vapeur (22) est dans le deuxième état de commutation (b).

5. Système de production de vapeur (22 ; 25) selon l'une des revendications 2 à 4, **caractérisé en ce que** le système de production de vapeur (22 ; 25) est adapté pour commuter entre le premier état de commutation (a) et le deuxième état de commutation (b) et pour faire fonctionner la pompe (15 ; 26, 27) associée au moins temporairement dans chacun des deux états de commutation (a, b).

6. Système de production de vapeur (22 ; 25) selon la revendication 5, **caractérisé en ce que** le réservoir de liquide (17) est rempli de liquide de nettoyage et le système de production de vapeur (22) est adapté pour faire fonctionner la pompe (15) temporairement dans le premier état de commutation (a) et pour ensuite ne pas la faire fonctionner.

7. Système de production de vapeur (22 ; 25) selon la revendication 6, **caractérisé en ce que** le système de production de vapeur (22 ; 25) est adapté pour faire fonctionner l'évaporateur (3) au moins dans le premier état de commutation (a).

8. Système de production de vapeur (22 ; 25) selon l'une des revendications 1 à 7, **caractérisé en ce que** le réservoir de liquide (17) est rempli d'eau.

9. Système de production de vapeur (22 ; 25) selon l'une des revendications précédentes, **caractérisé en ce qu'**un dispositif de détection de niveau (7) est couplé fluidiquement en parallèle à l'évaporateur (3).

10. Système de production de vapeur (22 ; 25) selon l'une des revendications précédentes, **caractérisé en ce que** le réservoir de liquide (17) est amovible.

11. Système de production de vapeur (22 ; 25) selon l'une des revendications précédentes, **caractérisé en ce que** l'évaporateur (3) est un chauffe-eau instantané.

12. Procédé pour faire fonctionner un système de production de vapeur (22 ; 25) comprenant un réservoir de liquide (17), un évaporateur (3) alimentable à partir du réservoir de liquide (17) et une pompe (15 ; 26, 27) pour transporter le liquide, dans lequel, pour vidanger au moins l'évaporateur (3), le liquide est refoulé au moyen de la pompe (15 ; 27) hors de l'évaporateur (3) dans le réservoir de liquide (17),
**caractérisé en ce que**
la pompe (15) pompe le liquide dans les deux directions de transport, la pompe (15) pouvant pour cela être reliée fluidiquement à l'évaporateur (3), soit par son côté refoulement ou son côté aspiration, et être reliée au réservoir de liquide (17) par son autre côté respectif.

13. Procédé selon la revendication 12, **caractérisé en ce que**, ensuite, le liquide est transporté au moyen de la pompe (15 ; 26) hors du réservoir de liquide (17) dans l'évaporateur (3), ledit liquide étant de l'eau.

14. Procédé selon la revendication 12, **caractérisé en ce que**, ensuite, le liquide est transporté au moyen de la pompe (15 ; 26) hors du réservoir de liquide (17) dans l'évaporateur (3), ledit liquide étant un liquide de nettoyage, puis maintenu dans l'évaporateur (3).
